# EUROPEAN PATENT SPECIFICATION

(11) **EP 4 053 049 B1**
(45) Date of publication and mention of the grant of the patent: **21.05.2025**
(21) Application number: 21178535.7
(22) Date of filing: 09.06.2021
(51) Int. Cl.: B65G 17/38, A01D 46/24

(54) **FRUIT OR VEGETABLE TRANSPORT SYSTEM**
TRANSPORTSYSTEM FÜR OBST UND GEMÜSE
SYSTÈME DE TRANSPORT DE FRUITS OU DE LÉGUMES

(30) Priority: 03.03.2021 IT 202100004976
(43) Date of publication of application: 07.09.2022
(73) Proprietor: Rad-Hub S.r.l., 25015 Desenzano del Garda (BS) (IT)
(72) Inventor: TOSI, Fabrizio, 25015 Desenzano del Garda, BRESCIA (IT)
(74) Representative: Chimini, Francesco

(56) References cited:
- EP-A1- 1 647 504
- EP-A2- 1 832 532
- WO-A1-2014/141216
- DE-A1- 10 151 863
- GB-A- 588 483

## Description

The present invention relates to the field of machines for the field harvesting of fruit and vegetables, and particularly relates to a fruit or vegetable harvesting system for fruits or vegetables from a harvesting point to an unloading point in a conveyor of a fruit or vegetable harvesting machine.

Self-propelled machines for the field harvesting of fruit or vegetables are well known. In order to make the harvesting process increasingly quicker and more efficient with a view to cutting harvesting costs, the trend is to construct machines equipped with several transport systems that transfer the fruit or vegetables simultaneously from several harvesting points to a conveyor, such as a belt conveyor, which moves the harvested fruit or vegetables toward containers or subsequent treatments.

Especially in the case of harvesting fruit, the machine is also equipped with one or more fixed or extendable platforms, each suitable for bringing operators to a certain height above the ground to allow them to pick the fruits from the plant. Each transport system must then transfer the harvested fruits from a position near the operator on the platform to the conveyor. The conveyor is usually placed at a certain distance and at a different level from the harvesting points, as it must receive fruit from different transport systems.

Since current transport systems consist substantially of conveyor belts, equipped, for example, with fingers or other means for retaining the fruits, and therefore have a rather rigid structure, which in practice does not allow for curves or jumps in elevation, the transfer of the fruits from the harvesting point to the unloading point takes place by arranging several separate conveyor belts in cascade. Said harvesting point, for example, in order not to force operators to continually rotate their bodies to place the fruit harvested from the plant on a main conveyor belt parallel to the row of fruit trees, requires the use of a first lateral conveyor belt, i.e., running alongside the operator, which flows into the main conveyor belt. Embodiments of fruit or vegetable harvesting system are shown in document WO2014/141216.

It is obvious that the use of several conveyor belts in cascade, however connected, involves the fruits passing from an upstream belt to a downstream belt, which may cause bruising and therefore be the cause of waste.

The object of the present invention is to propose a fruit or vegetable harvesting system capable of resolving the drawbacks mentioned above.

Another particular object of the invention is to provide a fruit or vegetable harvesting system that is able to improve harvesting ergonomics for the operator.

A further particular object of the invention is to provide a fruit and vegetable harvesting system that is also able to reduce harvesting time.

These objects are achieved with a harvesting system for fruit or vegetables in accordance with claim 1. Dependent claims describe preferred or beneficial embodiments of the harvesting system.

The features and advantages of the harvesting system according to the invention will become apparent from the description below of its preferred embodiments, given by way of non-limiting example, with reference to the attached figures, wherein:
- Fig. 1 is a perspective view of a fruit or vegetable transport system according to the invention;
- Fig. 1a is an enlarged view of the detail circled in Fig. 1;
- Fig. 1b is a side view of the transport system in Fig. 1;
- Fig. 1c is a cross section of the transport system of Fig. 1 and 1b along the line A-A of Fig. 1b;

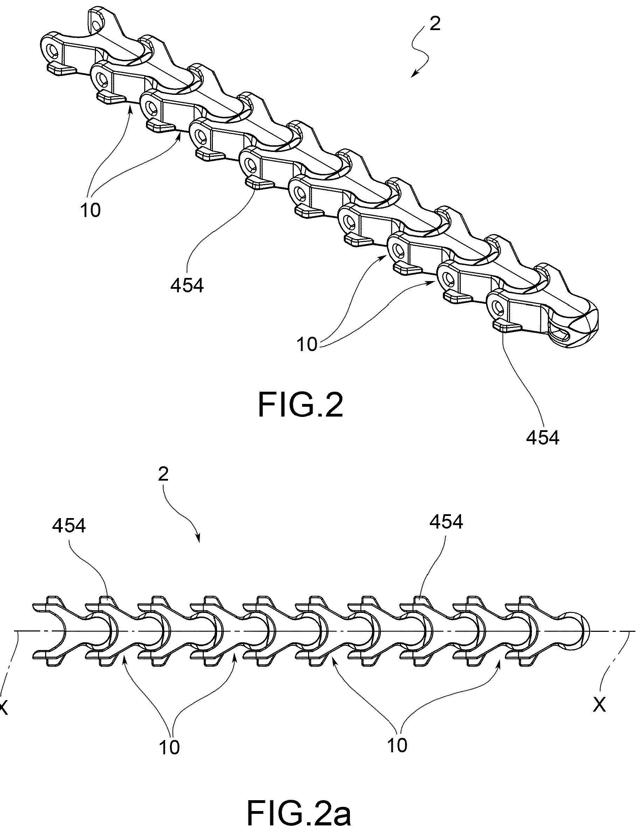

- Fig. 2 and 2a are a perspective view and a plan view of a portion of the only chain of the transport system;
- Fig. 3, 3a, and 3b are a perspective view from below, a side view, and an end view, respectively, of a portion of a chain formed by three transport modules on which are mounted two containers for as many individual fruits or vegetables;
- Fig. 4 is a cross section of the part of the chain along the line A-A in Fig. 3a;
- Fig. 4a-4d show, in perspective view, a portion of the chain equipped with as many examples of fruit or vegetable support means; and
- Fig. 5 and 5a are a perspective view and a side view of a harvesting machine using the fruit or vegetable transport system according to the invention.

In said drawings, reference 1 has been used to denote, in its entirety, a fruit or vegetable transport system for transferring fruits 3 or vegetables from a harvesting point to an unloading point in a conveyor, such as a conveyor of a fruit or vegetable harvesting machine (an example of which will be described below).

The transport system 1 comprises a plurality of transport modules 10 connected together in a way which forms a closed chain 2.

Each transport module 10, or two or more adjacent transport modules 10, are provided with support means 12 configured to hold a single fruit or vegetable, or possibly multiple fruits or vegetables, in a stable position but in such a way that they are not in contact with each other.

Each transport module 10 comprises an axially symmetrical body 14 extending along a module axis X defining, along said module axis X, a spherical head 16 and a pair of arms 18 rigidly connected to the spherical head.

The spherical head 16 is crossed transversely to the module axis X by a through head opening 20.

This through head opening 20 forms on the outer surface of the spherical head 16 opposing eyelets 22 with prevalent extension in the direction of the module axis X.

In one embodiment, the spherical head 16 is hollow, whereby the through head opening 20 is defined by the inner cavity and the opposing eyelets 22 formed in the wall of the spherical head delimiting the inner cavity.

The arms 18 diverge from the spherical head 16 so as to form respective distal portions of the arm 24 that are mutually spaced so as to form therebetween a head seat 26 that accommodates the spherical head 16 of an adjacent transport module 10.

The distal arm portions 24 are connected to each other by a connection pin 30 that passes through the through head opening 20. The connection pin 30 extends predominantly along a pin axis K.

Thus, the through head opening 20 accommodates the connection pin 30 allowing the latter, due to the presence of the opposing eyelets 22, a certain pivot around a head axis Z, for example passing through the center of the spherical head 16, perpendicular to both the module axis X and the pin axis K.

For example, the amplitude of the pivot of the connection pin 30 is limited by the end walls of said eyelets 22.

The connection pin 30 is also free to rotate in the through opening 20 about its own pin axis K.

Therefore, each transport module 10 is free to rotate with respect to the spherical head 16 of the adjacent transport module (i.e., with respect to the spherical head 16 to which the arms 18 of the transport module 10 are connected by means of the connection pin 30), either about the pin axis K or about the head axis Z.

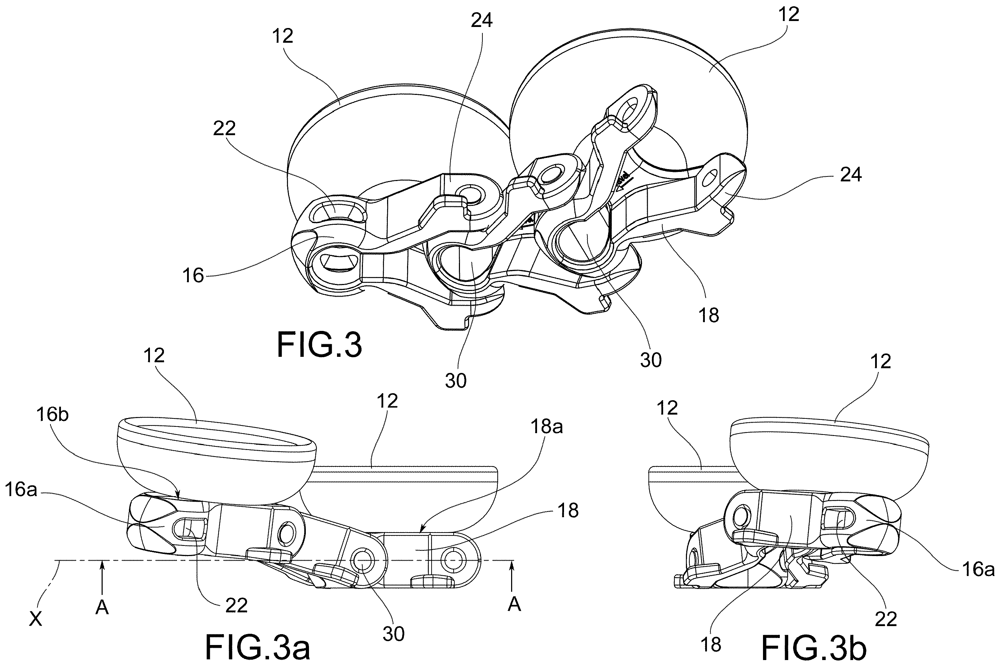

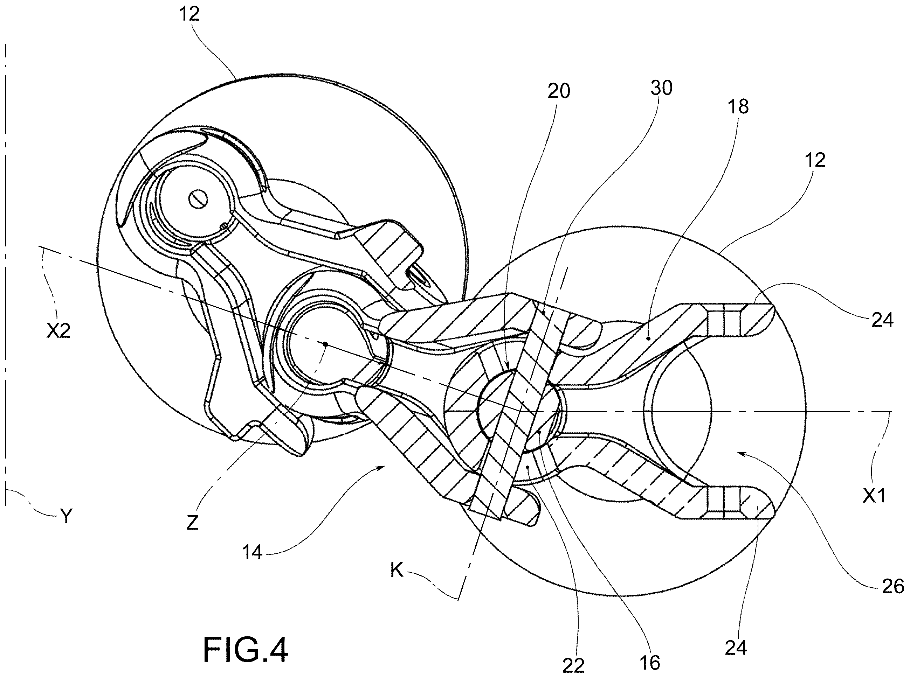

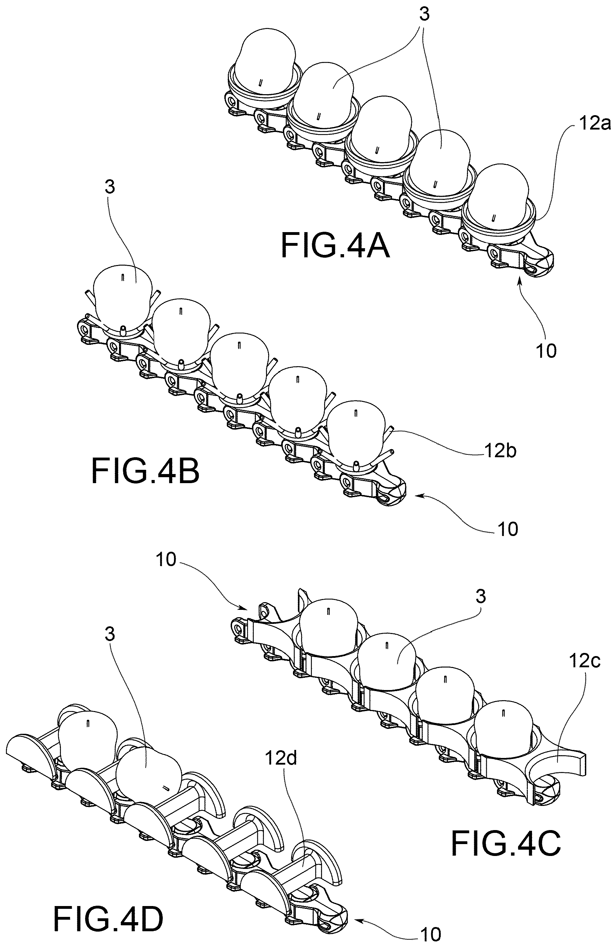

Thus, with particular reference to Fig. 3a and 4, considering, for example, the module axis X₁ of a first transport module 10 lying in a horizontal plane, the module axis X₂ of a second transport module 10a adjacent to the first can rotate either in said horizontal plane (X-Y plane in Fig. 4) or in a vertical plane (X-Z plane in Fig. 3a).

As a result, the chain 2 can form curves and oblique portions so as to make direction changes and elevation changes in its loop path.

The transport system 1 further comprises motorized movement means 40 and guide means 35-described below-of the chain 2 along a predetermined loop path.

In one embodiment, the extension of the opposing eyelets 22 in the direction orthogonal to the prevailing direction is substantially equal to the diameter of the connection pin 30, whereby the connection pin 30 is guided by the opposing eyelets 22 to rotate about the head axis Z.

In one embodiment, the arms 18 and the spherical head 16 are made in one piece.

In one embodiment, the distal arm portions 24 are parallel to each other and tangent to the spherical head 16. This facilitates, for example, the fastening of the connection pin 30 to the distal arm portions 24.

In one embodiment, the spherical head 16 comprises a spherical side portion 16a affected by the opposing eyelets 22 and a flat top wall 16b coplanar to flat top walls 18a of the arms 18.

Therefore, the top walls 16b and 18a of the head and arms form a plane that can be used as a base for the support means 12.

Fig. 4a-4d show some examples of support means 12. In Fig. 4a and 4b, the transport modules 10 are equipped with containers for a single fruit or vegetable, for example in the form of a bowl 12a (Fig. 4a) or fingers 12b (Fig. 4b). In Fig. 4c and 4d, the transport modules 10 are equipped with separator elements 12c; 12d, a single fruit or vegetable being held stably between two adjacent separator elements.

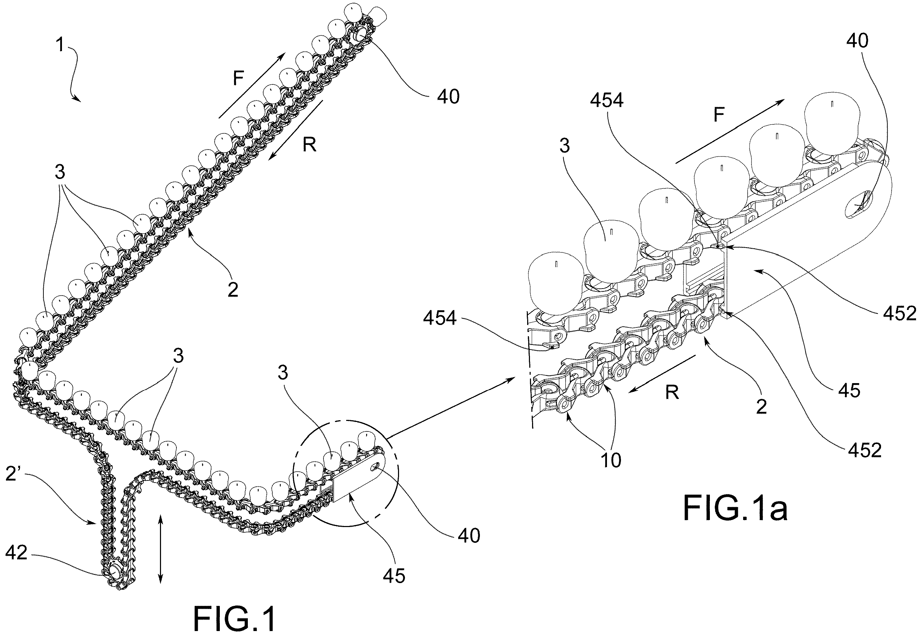

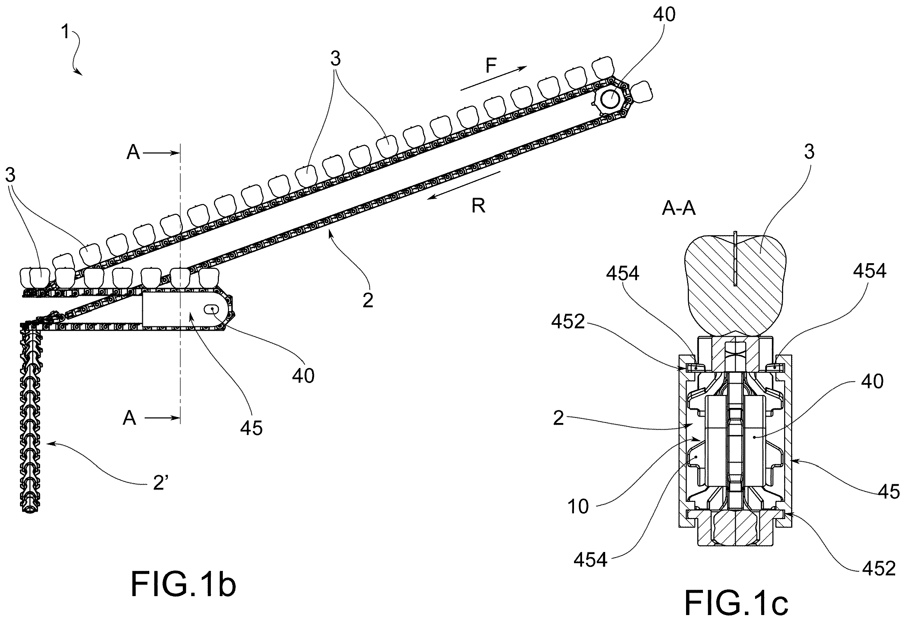

Returning to the transport system illustrated in Fig. 1, in one embodiment, the motorized movement means comprise at least two return members 40, for example pulleys, suitable to reverse the travel direction of the chain 2 between a forward path (arrow F) and a return path (arrow R).

In one embodiment, the return path of the chain 2 has a longer length relative to the forward path. The motorized movement means include, along the return path, at least one length-adjusting return member 42 arranged to form a chain 2 recovery portion 2' in the return path that allows the length of the forward path to be modified.

For example, the recovery portion 2' of the chain 2 runs vertically.

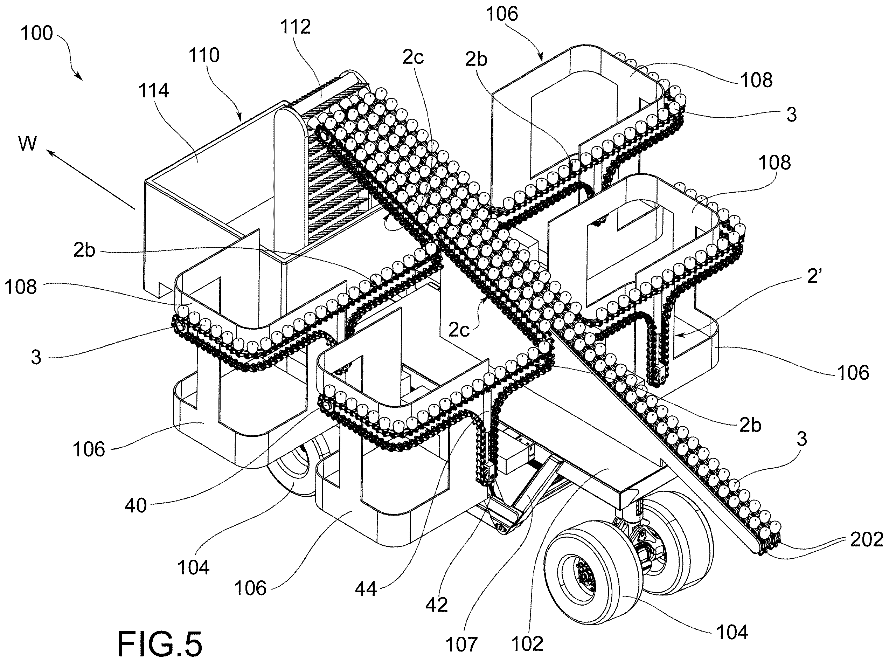

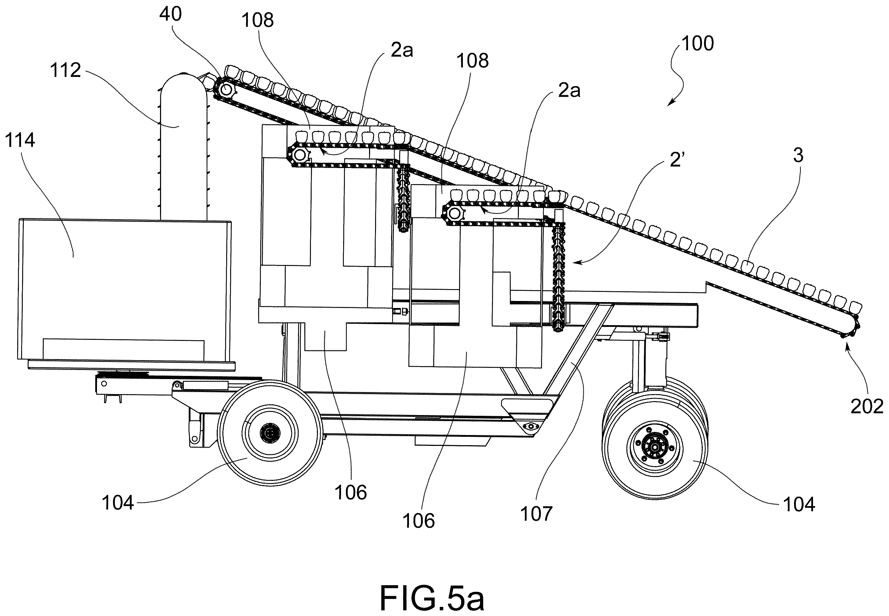

The length-adjusting return member 42 and at least one other return member 40 can be connected to actuator means 44 (Fig. 5) for an adjustment of their position and thus for an adjustment of the length of the forward path of the chain 2.

In one embodiment, the guide means 45 comprise a guide track 452 wherein the transport modules 10 of the chain 2 run.

For example, each transport module 10 is provided with a pair of lateral guide flaps 454 suitable for sliding into the guide track 452.

Note that, in one embodiment, the guide means 45 can only be provided in certain portions of the chain 2, for example so as to allow for changes in direction and elevation along the path.

In other embodiments, the guide means 45 are made in such a way and/or of such a material whereby they follow the path of the chain 2 even in changes of direction and/or elevation.

In the example of Fig. 1-1c, the guide means 45 comprise a box body wherein the guide track 452 is formed for both the forward path and the return path of the transport modules 10.

The fruit or vegetable harvesting system employs the above-described transport system.

The harvesting system further comprises at least one support platform for an operator, which defines a harvesting point of the fruit or vegetables, and a conveyor suitable to receive the fruit or vegetables transferred from the transport system.

The closed chain 2 forms a portion of the forward path that directly connects the harvesting point to the conveyor, whereby each harvested fruit or vegetable is transferred from the harvesting point to the conveyor without being moved from its position defined by the support means.

Fig. 5 and 5a schematically illustrate a fruit harvesting machine 100 implementing an example of said fruit or vegetable harvesting system.

The harvesting machine 100 comprises a frame 102 resting on wheels 104 for movement over the harvested field along a direction of travel W.

Operator support platforms 106 are attached to the frame 102. Each operator support platform 106 can accommodate one or more operators tasked with picking the fruits from the plant. The support platforms 106 can be connected to the frame 102, for example by means of articulated arms 107, so as to be translatable transversely with respect to the direction of travel W and possibly also vertically.

Operator support platforms 106 that are not vertically movable are connected to the frame 102 at different heights so that operators can still reach different harvesting heights.

Each operator support platform 106 can be equipped with a guardrail 108 that protects the operator from the risk of falling from the platform and acts as an anchoring element for the transport system.

The harvesting machine 100 is equipped with a conveyor 110 suitable to receive fruit or vegetables transferred from the transport system 1. In the illustrated example, the conveyor 110 comprises an automatically vertically adjustable filler belt 112 that receives the fruits from the transport system 1 and deposits them into a container 114.

Thus, in the example shown, the transport system 1 conveys the fruits to the top of the filler belt 112.

However, in a variant embodiment, the filler belt 112 can be eliminated by making the same chain 2 of the transport system complete a vertical descending portion before being recovered for the return path toward the operator support platforms 104. In this case, the support means 12 will be constructed so as to hold the fruit during the downward parabola.

As can be appreciated from Fig. 5 and 5a, each operator support platform 106 is associated with a chain 2 of the transport system 1.

In particular, a first forward portion 2a of the chain 2 extends in front of the operator engaged in harvesting, i.e., parallel to the forward direction W of the machine. The chain 2 then makes a bend, for example substantially 90°, so as to continue with a second forward portion 2b directed toward the central part of the machine 100. The chain 2 then completes a second curve so as to continue with a third portion 2c that ends at the top of the filler belt 112. This is where the return portion of the chain 2 begins, running parallel to the same portions of the forward path in the opposite direction.

The harvesting machine 100 illustrated in the example also has two straight, parallel center chains 202 extending between a lower harvesting point, projecting, for example, beyond the rear end of the frame 102, and the top of the filler belt 112.

As can be seen, all the chains 2; 202 of the fruit transport system 1 of the machine 100 run along different directions and make elevation jumps up to the filler belt 112 without any discontinuity in the transport of the fruits, which remain stably supported on their respective support means 12 from the harvesting point to the unloading point in the conveyor 110.

In other words, using the proposed transport system, it is possible to obtain a single level of conveyance of harvested fruit or vegetables without the need for transfers from one conveyance system to another due to changes in direction and/or level, as is the case with harvesting systems according to the prior art.

Note that the first forward portion 2a extending in front of the operator makes the operator's job much more convenient, comfortable, safe, and fast.

The ability to transport the fruits or vegetables individually means that the fruits or vegetables are not bruised or damaged, leading to a dramatic reduction in waste.

As mentioned above, the proposed transport system allows for a significant improvement in harvesting ergonomics. Operators will always have the transport system positioned in the most favorable way for them, as they are able to modify the path as they wish and are able to have the system follow the movements of the platform.

Harvesting times are also reduced as a result of eliminating unnecessary body rotations. Consider, for example, that for each rotation of the operator's body, now no longer necessary, two seconds are "lost" on the harvest time; moreover, the movements are tiring for the operator.

The chain can be set up with different means for supporting fruits or vegetables, depending on their type and/or size.

Moreover, it is possible to construct such fruit or vegetable support means with foodstuff materials in contact with the crop.

## Claims

1. A fruit or vegetable harvesting system, comprising:
- a transport system (1) for transferring fruits or vegetables from a harvesting point to an unloading point on a conveyor;
- at least one support platform (106) for an operator, the support platform (106) defining a harvesting point for the fruit or vegetables;
- a conveyor (110) suitable to receive the fruit or vegetables transferred from the transport system;
wherein the transport system comprises a plurality of transport modules (10) connected to one another so as to form a closed chain (2), where each transport module is provided with, or jointly forms with one or more adjacent transport modules, support means (12) configured to keep a single fruit or vegetable or several fruits or vegetables in a stable position without mutual contact, wherein each transport module comprises a module body (14) with axial symmetry extending along a module axis (X) defining along said module axis (X) a spherical head (16) and a pair of arms (18) firmly connected to the spherical head, where the spherical head is crossed transversely to the module axis (X) by a through head opening (20) forming, on the outer surface of the spherical head, opposite eyelets (22) with a prevalent extension in the direction of the module axis (X), and where said arms diverge from the spherical head so as to form corresponding distal arm portions (24), which are mutually spaced apart so as to form therebetween a head seat (26), which accommodates the spherical head of an adjacent transport module, the distal arm portions being connected by a connection pin (30) passing through the through head opening, so that the arms of each transport module are free to rotate with respect to the spherical head of the transport module to which they are connected, both about the axis of the connection pin (K) and about a head axis (Z) passing through the center of the spherical head and orthogonal to the axis of the connection pin (K), the transport system further comprising motorized movement means (40) and guide means (35) for the chain along a predetermined ring path;
wherein the harvesting system is **characterized in that** the closed chain forms a portion of the forward path, which directly connects the harvesting point to the conveyor, so that each fruit or vegetable collected is transferred from the harvesting point to the conveyor without being moved from the position thereof defined by the support means.

2. Harvesting system according to claim 1, wherein the extension of the opposite eyelets (22) in the direction orthogonal to the prevalent direction is substantially equal to the diameter of the connection pin (30), so that the connection pin is guided by the opposite eyelets to rotate about the head axis (Z).

3. Harvesting system according to claim 1 or 2, wherein the arms (18) and the spherical head (16) are made in one piece of a single body.

4. Harvesting system according to any one of the preceding claims, wherein the distal arm portions (24) are parallel to each other and tangent to the spherical head (16).

5. Harvesting system according to any one of the preceding claims, wherein the spherical head (16) comprises a spherical side portion (16a) affected by the opposite eyelets (22) and a flat top wall (16b), which is coplanar to flat top walls (18a) of the arms.

6. Harvesting system according to any one of the preceding claims, wherein the motorized movement means (40) comprise at least two return members (42) suitable to reverse the advancing direction of the chain between a forward path and a return path.

7. Harvesting system according to the preceding claim, wherein the return path of the chain has a greater length than the forward path, the motorized movement means (40) comprising, along the return path, at least one return member (42) arranged so as to obtain a recovery portion (2') of the chain in the return path, which allows the length of the forward path to be modified.

8. Harvesting system according to any one of the preceding claims, wherein the guide means (35) comprise a guide track (452) suitable to guide the translation of the transport modules.

9. Harvesting system according to the preceding claim, wherein each transport module (10) is provided with lateral guide flaps (454) suitable to slide in the guide track.

10. Harvesting machine according to any one of the claims 1-9 where a transport system chain is associated with each operator support platform (106), wherein each transport system chain forms a portion of the forward path, which directly connects the harvesting point of the fruits from the plant to the conveyor, so that each harvested fruit is transferred from the harvesting point to the conveyor without being moved from the position thereof defined by the support means.

11. Harvesting machine according to the preceding claim, wherein a first portion (2a) of the forward path of the chain extends opposite the operator engaged in the harvesting of the fruits on an operator support platform (106).

## Patentansprüche

1. Früchte- oder Gemüse-Erntesystem, umfassend:
- ein Transportsystem (1) für ein Überführen von Früchten oder Gemüse von einem Erntepunkt zu einem Entladepunkt auf einem Beförderungsmittel;
- wenigstens eine Trageplattform (106) für einen Betreiber, wobei die Halterungsplattform (106) einen Erntepunkt für die Früchte oder das Gemüse definiert;
- ein Beförderungsmittel (110), welches dazu in der Lage ist, die Früchte oder das Gemüse zu erhalten, welche von dem Transportsystem überführt werden; wobei das Transportsystem eine Mehrzahl von Transportmodulen (10) umfasst, welche miteinander verbunden sind, um eine geschlossene Kette (2) zu bilden, wobei jedes Transportmodul mit Halterungsmitteln (12) bereitgestellt ist oder gemeinsam mit einem oder mehreren benachbarten Transportmodulen solche bildet, welche dazu eingerichtet sind, eine einzelne Frucht oder ein einzelnes Gemüse oder mehrere Früchte oder Gemüse in einer stabilen Position ohne wechselseitigen Kontakt zu halten,
wobei jedes Transportmodul einen Modulkörper (14) mit einer axialen Symmetrie umfasst, welcher sich entlang einer Modulachse (X) erstreckt, welcher entlang der Modulachse (X) einen sphärischen Kopf (16) und ein Paar von Armen (18) definiert, welche fest mit dem sphärischen Kopf verbunden sind, wobei der sphärische Kopf von einer Durchkopföffnung (20) transversal zu der Modulachse (X) durchkreuzt ist, welche, an der äußeren Fläche des sphärischen Kopfes, entgegengesetzte Ösen (22) mit einer vorwiegenden Erstreckung in der Richtung der Modulachse (X) bilden, und wobei die Arme von dem sphärischen Kopf auseinandergehen, um entsprechende distale Armabschnitte (24) zu bilden, welche wechselseitig voneinander beabstandet sind, um dazwischen einen Kopfsitz (26) zu bilden, welcher den sphärischen Kopf eines benachbarten Transportmoduls aufnimmt, wobei die distalen Armabschnitte durch einen Verbindungsstift (30) verbunden sind, welcher durch die Durchkopföffnung durchgeht, sodass die Arme jedes Transportmoduls frei sind, um in Bezug zu dem sphärischen Kopf des Transportmoduls, mit welchem sie verbunden sind, zu rotieren, sowohl um die Achse des Verbindungsstiftes (K) als auch um eine Kopfachse (Z), welche durch die Mitte des sphärischen Kopfes und orthogonal zu der Achse des Verbindungsstiftes (K) verläuft, wobei das Transportsystem ferner motorisierte Bewegungsmittel (40) und Führungsmittel (35) für die Kette entlang eines vorbestimmten Ringwegs umfasst,
wobei das Erntesystem **dadurch gekennzeichnet ist, dass** die geschlossene Kette einen Abschnitt des Vorwärtswegs bildet, welcher den Erntepunkt direkt mit dem Beförderungsmittel verbindet, sodass jede gesammelte Frucht oder jedes gesammelte Gemüse von dem Erntepunkt zu dem Beförderungsmittel überführt wird, ohne von der Position davon bewegt zu werden, welche durch die Halterungsmittel definiert ist.

2. Erntesystem nach Anspruch 1, wobei die Erstreckung der entgegengesetzten Ösen (22), in der Richtung orthogonal zu der vorwiegenden Richtung, im Wesentlichen gleich dem Durchmesser des Verbindungsstifts (30) ist, sodass der Verbindungsstift durch die entgegengesetzten Ösen geführt ist, um um die Kopfachse (Z) zu rotieren.

3. Erntesystem nach Anspruch 1 oder 2, wobei die Arme (18) und der sphärische Kopf (16) aus einem Stück eines einzelnen Körpers hergestellt sind.

4. Erntesystem nach einem der vorhergehenden Ansprüche, wobei die distalen Armabschnitte (24) parallel zueinander sind und tangential zu dem sphärischen Kopf (16) sind.

5. Erntesystem nach einem der vorhergehenden Ansprüche, wobei der sphärische Kopf (16) einen sphärischen Seitenabschnitt (16a), welcher durch die entgegengesetzten Ösen (22) beeinflusst ist, und eine ebene Oberwandung (16b) umfasst, welche komplanar zu ebenen Oberwandungen (18a) der Arme ist.

6. Erntesystem nach einem der vorhergehenden Ansprüche, wobei die motorisierten Bewegungsmittel (40) wenigstens zwei Rückführelemente (42) umfassen, welche dazu in der Lage sind, die Fortbewegungsrichtung der Kette zwischen einem Vorwärtsweg und einem Rückweg umzudrehen.

7. Erntesystem nach dem vorhergehenden Anspruch, wobei der Rückweg der Kette eine größere Länge als der Vorwärtsweg aufweist, wobei die motorisierten Bewegungsmittel (40), entlang des Rückwegs, wenigstens ein Rückführelement (42) umfassen, welches angeordnet ist, um einen Rückgewinnungsabschnitt (2') der Kette in dem Rückweg zu erhalten, welcher es der Länge des Vorwärtswegs ermöglicht, verändert zu werden.

8. Erntesystem nach einem der vorhergehenden Ansprüche, wobei die Führungsmittel (35) eine Führungsbahn (452) umfassen, welche in der Lage ist, die Translationsbewegung der Transportmodule zu führen.

9. Erntesystem nach dem vorhergehenden Anspruch, wobei jedes Transportmodul (10) mit seitlichen Führungsklappen (454) ausgestattet ist, welche in der Lage sind, in der Führungsbahn zu gleiten.

10. Erntemaschine nach einem der Ansprüche 1 bis 9, wobei eine Transportsystemkette mit jeder Betriebstrageplattform (106) assoziiert ist, wobei jede Transportsystemkette einen Abschnitt des Vorwärtswegs bildet, welcher den Erntepunkt der Früchte von der Pflanze direkt mit dem Beförderungsmittel verbindet, sodass jede geerntete Frucht von dem Erntepunkt zu dem Beförderungsmittel überführt wird, ohne von der Position davon bewegt zu werden, welche durch die Halterungsmittel definiert ist.

11. Erntemaschine nach dem vorhergehenden Anspruch, wobei ein erster Abschnitt (2a) des Vorwärtswegs der Kette sich entgegengesetzt des Betreibers erstreckt, welcher mit einem Ernten der Früchte auf einer Betreibertrageplattform (106) beschäftigt ist.

## Revendications

1. Système de récolte de fruits ou de légumes, comprenant :
- un système de transport (1) destiné au transfert de fruits ou de légumes d'un point de récolte à un point de déchargement sur un convoyeur ;
- au moins une plateforme de soutien (106) pour opérateur, la plateforme de soutien (106) définissant un point de récolte des fruits ou légumes ;
- un convoyeur (110) apte à recevoir les fruits ou légumes transférés à partir du système de transport ;
dans lequel le système de transport comprend une pluralité de modules de transport (10) raccordés entre eux de manière à former une chaîne fermée (2), où chaque module de transport est doté de moyens de soutien (12), ou forme conjointement avec un ou plusieurs modules de transport adjacents des moyens de soutien (12), configurés pour maintenir un fruit ou légume unique ou plusieurs fruits ou légumes dans une position stable et sans contact mutuel, dans lequel chaque module de transport comprend un corps de module (14) présentant une symétrie axiale s'étendant le long d'un axe de module (X) et définissant le long dudit axe de module (X) une tête sphérique (16) et une paire de bras (18) solidaires de la tête sphérique, où la tête sphérique est coupée, transversalement à l'axe du module (X), par une ouverture traversante de tête (20) formant, sur la surface externe de la tête sphérique, des œillets opposés (22) dont l'extension prédominante se trouve dans le sens de l'axe du module (X), et où lesdits bras divergent à partir de la tête sphérique de manière à former des parties de bras distales (24) correspondantes, qui sont espacées les unes des autres de manière à former entre elles un siège de tête (26), qui accueille la tête sphérique d'un module de transport adjacent, les parties de bras distales étant raccordées par une broche de raccordement (30) passant à travers l'ouverture de tête traversante, de sorte que les bras de chaque module de transport sont libres de pivoter par rapport à la tête sphérique du module de transport à laquelle ils sont raccordés, à la fois autour de l'axe de la broche de raccordement (K) et autour d'un axe de tête (Z) traversant le centre de la tête sphérique et orthogonal à l'axe de la broche de raccordement (K), le système de transport comprenant en outre des moyens de déplacement motorisés (40) et des moyens de guidage (35) de la chaîne le long d'un trajet annulaire prédéterminé ;
dans lequel le système de récolte est **caractérisé en ce que** la chaîne fermée forme une partie du trajet aller, qui raccorde directement le point de récolte au convoyeur, de sorte que chaque fruit ou légume récolté est transféré du point de récolte vers le convoyeur sans être déplacé de sa position définie par les moyens de soutien.

2. Système de récolte selon la revendication 1, dans lequel l'extension des œillets opposés (22) dans la direction orthogonale à la direction prédominante est sensiblement égale au diamètre de la broche de raccordement (30), de sorte que la broche de raccordement est guidée par les œillets opposés pour pivoter autour de l'axe de tête (Z).

3. Système de récolte selon la revendication 1 ou 2, dans lequel les bras (18) et la tête sphérique (16) sont réalisés en une seule pièce d'un seul corps.

4. Système de récolte selon l'une quelconque des revendications précédentes, dans lequel les parties de bras distales (24) sont parallèles les unes aux autres et tangentes à la tête sphérique (16).

5. Système de récolte selon l'une quelconque des revendications précédentes, dans lequel la tête sphérique (16) comprend une partie latérale sphérique (16a) affectée par les œillets opposés (22) et une paroi supérieure plane (16b), qui est coplanaire aux parois supérieures planes (18a) des bras.

6. Système de récolte selon l'une quelconque des revendications précédentes, dans lequel les moyens de déplacement motorisés (40) comprennent au moins deux organes de retour (42) aptes à inverser la direction d'avancement de la chaîne entre un trajet aller et un trajet retour.

7. Système de récolte selon la revendication précédente, dans lequel le trajet retour de la chaîne présente une longueur supérieure au trajet aller, les moyens de mouvement motorisés (40) comprenant, le long du trajet retour, au moins un organe de retour (42) agencé de manière à obtenir une partie de récupération (2') de la chaîne dans le trajet retour, ce qui permet de modifier la longueur du trajet aller.

8. Système de récolte selon l'une quelconque des revendications précédentes, dans lequel les moyens de guidage (35) comprennent une piste de guidage (452) appropriée pour guider le mouvement de translation des modules de transport.

9. Système de récolte selon la revendication précédente, dans lequel chaque module de transport (10) est doté de pattes de guidage latérales (454) aptes à coulisser dans la piste de guidage.

10. Machine de récolte selon l'une quelconque des revendications 1 à 9 comportant une chaîne de système de transport associée à chaque plateforme de soutien d'opérateur (106), dans laquelle chaque chaîne de système de transport forme une partie du trajet aller, qui raccorde directement le point de récolte des fruits de la plante au convoyeur, de sorte que chaque fruit récolté est transféré du point de récolte au convoyeur sans être déplacé de sa position définie par les moyens de soutien.

11. Machine de récolte selon la revendication précédente, dans laquelle une première partie (2a) du trajet aller de la chaîne s'étend à l'opposé de l'opérateur impliqué dans la récolte des fruits sur une plateforme de soutien d'opérateur (106).
